(19) Europäisches Patentamt

European Patent Office

Office européen des brevets

(11) EP 0 921 502 A2

(12) **EUROPEAN PATENT APPLICATION**

(43) Date of publication:
09.06.1999 Bulletin 1999/23

(51) Int. Cl.$^6$: **G07F 17/24**, G07F 7/02

(21) Application number: 98309863.3

(22) Date of filing: 02.12.1998

(84) Designated Contracting States:
AT BE CH CY DE DK ES FI FR GB GR IE IT LI LU MC NL PT SE
Designated Extension States:
AL LT LV MK RO SI

(30) Priority: 02.12.1997 JP 34867097

(71) Applicants:
• Toshi Kaizou System Corporation
Osaka (JP)

• OMRON Corporation
Kyoto (JP)

(72) Inventor: Tsubota, Takahiro
Takarazuka, hyogo (JP)

(74) Representative:
Piésold, Alexander J.
Frank B. Dehn & Co.,
European Patent Attorneys,
179 Queen Victoria Street
London EC4V 4EL (GB)

(54) **A charging system of a parking space**

(57) A new charging system using a prepaid card for a parking space is provided. A pay-by-the-day card is used, and a specified time zone is defined. Use within the specified time zone is charged on a pay-by-the-hour basis. Use outside the specified time zone is charged with a constant charge irrespective of the duration or repetition of use in one day.

FIG. 7

EP 0 921 502 A2

**Description**

The present invention relates to a charging system for a multi-story parking space, said multi-story parking space including one for bicycles, and in particular, the present invention relates to a charging system using a prepaid card.

Systems of charging a price of a transaction with a prepaid card have been used extensively because of the convenience of using the card in place of cash. Their applications are not limited to shopping and use of a means of transportation. Normally, when a prepaid card is used, the amount of price of a transaction is subtracted from the balance of the card, and the date and price of the transaction, the resulting balance, etc. are printed on the back of the card. In such a use of the prepaid card, however, it functions just as a substitute for cash, and its amount of added value is not high. Payment of a parking charge with a prepaid card in a parking space is possible only when the parking charge is subtracted from the balance according to the parking hours in a temporary parking space.

A conventional parking space is separated into a temporary parking zone and a pay-by-the-month parking zone. In such a pay-by-the-month parking zone, a specific parking space or stall is allotted to a specific user, and a specified amount of parking charge is paid every month. Thus the zone is used in a fixed manner in terms of both space and charge. Accordingly, even if there is an open space in the pay-by-the-month parking zone at a busy time, the open space can not be used for temporary parking. The open parking space is just kept open to waste. On the other hand, in a parking space mainly designed for temporary parking, the space for pay-by-the-month parking is limited. As any parking space can not be reserved for vehicles requesting pay-by-the-month parking, the parking space can not function as a garage for these vehicles. Thus the conventional parking spaces have low parking efficiencies and low availability factors and have to set their parking charges high, irrespective of their types, temporary parking and pay-by-the-month parking.

The charging system of a vehicle parking space according to a first aspect of the present invention uses a prepaid card to charge the parking charge for a parking space and comprises

a means for issuing at least two kinds of cards, a prepaid card including a right to park a vehicle for plural times and another parking card,
a means for reading said prepaid card at a time of entrance of a vehicle into the parking space,
a memory for storing data for specifying the vehicle entered and the entrance time from said means for reading said card,
a processing means for determining, at a time of exit of said vehicle, the parking hours from the difference between the exit time and the entrance time stored and judging whether a specified time zone is included in said parking hours, and
determining from the parking hours the amount of charge for the first parking of the day for parking the vehicle outside the specified time zone and determining the amount of charge for parking within the specified time zone, and
a means for charging, at the time of exit of said vehicle from the parking space, the amount of charge determined by said processing means on said prepaid card and printing the balance after charging on said prepaid card.

Preferably, said parking space is a multi-story parking space of a mechanical type, and said another parking card is, for example, for temporary parking, and said specified time zone is, for example, the daytime of a holiday. Charging for only the first parking of a day means that the parking charge is the amount of charge for one time of parking whatever the times of parkings actually made provided that the repeated parkings are made in one day. Said means for reading said prepaid card at a time of entrance and said means for charging the amount of charge determined by said processing means on the prepaid card at a time of exit and printing the balance after charging on the prepaid card may be, for example, card readers. If the entrance position and the exit position is the same, one card reader may be used as both the former means and the latter means.

Preferably, the number of said prepaid cards that are issued and are available is kept within the parking capacity of the parking space, and each of said prepaid cards is printed with a vehicle identification number. Furthermore, preferably, an available period is set for each prepaid card to make the number of prepaid cards that are issued and are available a controllable concept.

Preferably, the charging system of the present invention further comprises a means for counting the number of said prepaid cards that are issued and are available,

a means for predicting the required open space in said specified time zone from the counted number of prepaid cards that are issued and are available, and
a means for comparing the open space in the parking space at the time and said required open space and enabling parking with said another parking card when the open space at the time is wider than said required open space. With this arrangement, parking is guaranteed to the holders of the prepaid cards.

Preferably, in said parking space, a vehicle is transported by a lift between the entrance position or the exit position and a parking floor, and on a parking floor, a vehicle is transported by a carrier between a parking position provided along a travelling route of said carrier and said lift.

Here, the specified time zone is a day of the week or a time zone that is expected to be busy or a combination of the day and the time zone. A charge on a pay-by-the-hour basis is set for parking within this specified time zone, and for parking in any time zone but the specified time zone the charge is only for the first parking irrespective of the parking hours nor the number of parkings. This is the same as charging on a pay-by-the-day basis.

According to preferred embodiments of the present invention, in the charging system of a parking charge with a prepaid card, at the time of adjustment, the charging method for the specified time zone is differentiated from one for any other time zone. Parking within the specified time zone is charged at a pay-by-the-hour rate, and parking in any other time zone is charged at a pay-by-the-day rate irrespective of the duration of parking or number of parkings. Moreover, in addition to said prepaid card, another parking card is issued. Thus the parking space allows the use of two kinds of cards, said prepaid card mainly designed for pay-by-the-month parking or long-term contract and said another parking card designed for temporary parking.

Here, preferably, the daytime of a holiday that is expected to be most busy is defined as the specified time zone, and parking within that time zone is charged on the pay-by-the-hour basis, and parking in any other time zone is charged on the pay-by-the-day basis irrespective of the duration of parking or the number of parkings in the same day. Thus a single prepaid card can be used in two ways according to time zone. Moreover, as each holder of this prepaid card can use the parking space any times and for any hours in a day at the same charge provided the parking is made outside the specified time zone, the availability factor of the parking space will be improved and the parking charge can be lowered. If parking charge is charged on a pay-by-the-hour basis in the specified time zone that is particularly busy, the profitability of the parking space can be increased. Moreover, as the availability factor is improved, the profitability of the parking space can be increased. In this way, the amount of added value of the card can be increased by differentiating the charging method of parking charge into a different one according to some conditions preset by the parking space operator. Each holder of the card can park his or her vehicle at a low parking charge while maintaining a merit of being able to park the vehicle continuously for months.

As each holder of the prepaid card is induced by the charging arrangement to avoid parking within the specified time zone, the parking space can be opened extensively for temporary parking within the specified time zone, and on the other hand, the parking space can be opened extensively to the holders of the prepaid card during the nighttime, the daytime of every weekday, etc. As a result, the same parking space can be used double for both temporary parking and parking with the prepaid card, and the efficiency of use of the parking space will be improved.

Moreover, as the number of prepaid cards that are issued and are available is kept within the parking capacity of the parking space and each of these prepaid cards are printed with a vehicle identification number, and preferably, each of these prepaid cards are made to store the vehicle identification number, each card holder can secure a space for parking and use it as a garage.

According to a second aspect, the present invention provides a charging system for a vehicle parking space using a prepaid card to charge the parking charge for the parking space comprising:

a means for issuing at least two kinds of cards, a prepaid card including a right to park a vehicle for plural times and another parking card;
a means for reading said prepaid card at a time of entrance of a vehicle into the parking space;
a memory for storing data for specifying the vehicle entered and the entrance time from said means for reading said card;
a means for counting the number of said prepaid cards issued and available;
a means for predicting the required open space in said specified time zone from the counted number of prepaid cards issued and available together with the past usage of the parking space; and
a means for comparing the open space in the parking space at the time and said required open space and enabling parking with said another parking card when the open space at the time is wider than said required open space.

In a parking space where entrance and exit of each vehicle are centrally controlled, the required open space within the specified time zone is derived from the number of said prepaid cards that are issued and are available, and said space is allotted to the relevant cards. In this way, the amount of added value of the card system is enhanced, information on customers can be collected through charging with the card and used, and space for parking is secured for the card holders. A certain required open space is secured for the card holders, and if extra open space is available, parking will be permitted irrespective of parking with the prepaid card or temporary parking. As a result, the availability factor of the parking space will be increased, and as the space for parking for the card holders can be secured, the number of cards issued will be increased and the parking charge can be lowered. On the other hand, as the number of the cards issued increases, the earnings of the parking space will increase.

As described above, with the use of said prepaid card, a parking space can be utilized flexibly according to the distribution of users, namely, temporary parking users and D-card users, the availability factor will be improved, and in turn, illegal parking on the street will be decreased, and the parking ratio in an area where space for parking is deficient will be increased.

Objectives of at least the preferred embodiments are:

1) to provide a new charging system using a prepaid card of a parking space,
2) to differentiate the charging method into a new one according to conditions preset by the parking space operator so as to enhance the added value of the card system,
3) to enable the parking space operator to collect and use information on its customers,
4) to effectively use the storing space according to the distribution of users of the parking space,
5) to raise the availability factor of the parking space,
6) and in turn to lower the parking charge,
7) to increase earnings of the parking space as a result of the higher availability factor,
8) to guarantee the users with parking spaces as garages, and
9) reduce illegal parking.

An additional objective of at least the preferred embodiments of the invention is to effectively use the storing space while assuring the card holders of parking space at a busy time.

Some preferred embodiments of the invention will now be described by way of example only and with reference to the accompanying drawings, in which:

Fig. 1 is a partial perspective view showing the construction of a multi-story parking space of an embodiment of the invention.
Fig. 2 is a block diagram showing the configuration of a charging system of the embodiment.
Fig. 3 is a diagram showing the contents of a parking card of the embodiment.
Fig. 4 is a diagram showing the transfer of information among the parking card, control computer and memory of the embodiment.
Fig. 5 is a flowchart showing the processing at a time of entrance into the parking space of the embodiment.
Fig. 6 is a flowchart showing the processing at a time of exit from the parking space of the embodiment.
Fig. 7 is a flowchart of calculating the parking charge with a D-card of the embodiment.
Fig. 8 is a characteristic diagram showing records of use of a conventional parking space on a holiday.
Fig. 9 is a characteristic diagram showing records of use of the conventional parking space on a weekday.
Fig. 10 is a characteristic diagram showing records of use of the parking space of the embodiment on a holiday.
Fig. 11 is a characteristic diagram showing records of use of the parking space of the embodiment on a weekday.
Fig. 12 is a flowchart for calculating the number of spaces secured for the D-card holders of the embodiment.

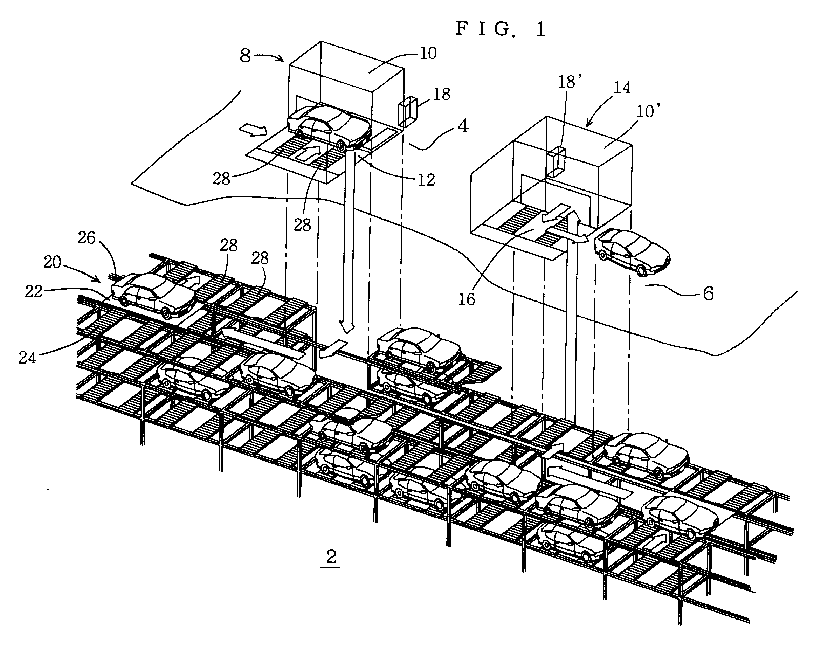

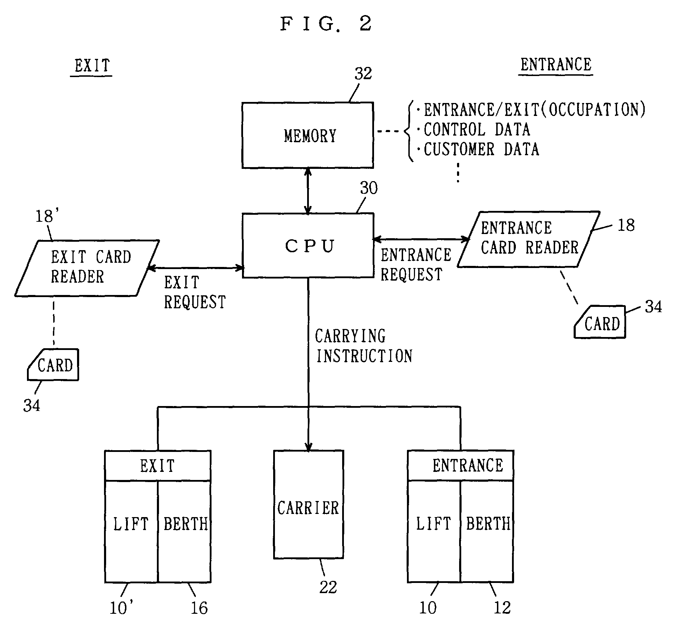

With reference to Fig. 1 and Fig. 2, the overall structure of a multi-story parking space of an embodiment and the outline of a control system thereof will be described. In Fig. 1, 2 denotes a multi-story parking space, 4 denotes an entrance floor, and 6 denotes an exit floor. 8 denotes a set of a lift for entrance 10 and an entrance berth 12, and each lift is provided with one entrance berth 12, 14 denotes a set of a lift for exit 10' and an exit berth 16, and similarly each lift 10' is provided with one exit berth 16. 18 denotes a card reader for entrance, and 18' denotes a card reader for exit, and both card readers can write. As the entrance berth and the exit berth are provided separately, the card readers 18, 18' are also provided separately. The entrance berth 12 and the exit berth 16 are provided with two power rollers corresponding to the front wheels and the rear wheels of a vehicle. Similarly, the lifts 10, 10' are provided with two power rollers for transporting a vehicle. Thus shift of a vehicle between the lift 10 and the entrance berth 12 and between the lift 10' and the exit berth 16 is made by sliding a vehicle on the power rollers.

On a parking floor 20, 22 denotes a power carrier for transporting a vehicle, and 24 denotes a parking position of a vehicle. The power carrier 22 and the parking position 24 are also provided with two power rollers, and a vehicle is transferred between the power carrier 22 and the parking position 24 by the sliding movement of the power rollers. 26 denotes rails for travel of the power carrier 22, and the power carrier 22 propels itself on the rails 22 with wheels not illustrated. In the embodiment, shifts of a vehicle between the entrance berth 12 and the lift 10, between the exit berth 16 and the lift 10', between the lifts 10, 10' and the power carrier 22 and between the power carrier and the parking position 24 are all done by power rollers 28. The power rollers 28 correspond to the front wheels and the rear wheels of a vehicle, and two power rollers 28 are provided on the floors of the power carrier 22 and the lifts 10, 10'. These power rollers 28 make a vehicle slip sideways to shift it.

The operation of the system will be described. A vehicle entering on the entrance floor 4 propels itself to the entrance berth 12. The passenger gets out of the vehicle there and inserts his or her parking card into the card reader for entrance 18. The subsequent entrance work is made automatically, and the passenger can enter into, for example, a shopping center in the building, through a passageway not illustrated. In case of exit, the passenger makes the card reader for exit 18' read his or her parking card to give an exit instruction and charge. The passenger moves from the pedestrian passageway and gets into the vehicle that has been exited onto the exit berth 16 to drive the vehicle out of the exit floor 6.

In the embodiment, the entrance request is defined as insertion of a parking card into the card reader 18 at a time of entrance. However, it may be arranged that no card reader 18 is provided and just like entrance in a conventional parking space, an entrance card being printed with the date and time of entrance is issued by a card issuer. In this case, charging may be made by inserting said parking card and the entrance card into the card reader for exit 18' at a time of exit.

At the time of entrance, the vehicle halted in the entrance berth is shifted onto the lift 10 by the power rollers 28. When the lift 10 arrives at the parking floor 20, the vehicle is shifted again by the power rollers 28 onto the power carrier 22. The power carrier 22 having received the vehicle propels itself on the rails 26 by means of a motor. When the power carrier 22 stops at a parking position 24 allotted to the vehicle, the vehicle is shifted into the parking position 24 by the power rollers 28. Travel of the power carrier 22 and allotment of the parking position 24 are controlled by a control processing unit 30 shown in Fig. 2.

The control system of the multi-story parking space of the embodiment is shown in Fig. 2. The control processing unit 30 responds to an entrance request from the card reader 18 and to an exit request from the card reader 18' to give necessary controls to enter a vehicle and to exit a vehicle, respectively. 32 denotes the memory of the control processing unit 30. Entrance/exit information such as status of entrance, control information, state of use by the customers, etc. are stored in the memory 32. 34 denotes a prepaid parking card. It is a pay-by-the-day card (D-card) for charging on a pay-by-the-day basis. It includes a right for parking, for example, for one month, if his or her vehicle is not parked within the specified time zone. It is a magnetic card or an IC card. Here, even if a vehicle is parked for hours or many times a day, the same amount is charged on the D-card except for the specified time zone. When parking is made within the specified time zone, charging is made for the parking hours. In many cases, the D-card for a certain amount of money is purchased on a continuous basis. As for temporary parking, charging may be made by a prepaid card other than the D-card or by cash. The prepaid card for temporary parking may be, for example, a complimentary card of a shopping center, etc. The shopping center purchase these cards by bulk from the parking space to give them to the customers.

At a time of entrance, the passenger of a vehicle makes the card reader 18 read his or her parking card 34. The card information at the time of entrance and the entrance time are transferred to the CPU 30, and this piece of information serves as an entrance request that gives control start instructions to various parts of the parking space. The CPU searches for an open space at that time point and gives a vehicle transport instruction to store the vehicle in the open space. At a time of exit, similarly, the passenger makes the card reader 18' read the parking card 34, and the card information is transferred to the CPU 30. This serves as an exit request to give a vehicle transport instruction for exiting the relevant vehicle from the parking position 24. Charging for parking with the D-card updates the balance point at the first exit of the day, and no charging is made for the second and subsequent parkings in the same day, if all these parkings are done during the hours not belonging the specified time zone. As will be described later, the parking space defines a day of the week or a time zone that is expected to be busy or a combination of the day and the time zone as the specified time zone. Paring within this specified time zone is charged according to the parking hours even for the holders of the D-cards, and the balance point is updated.

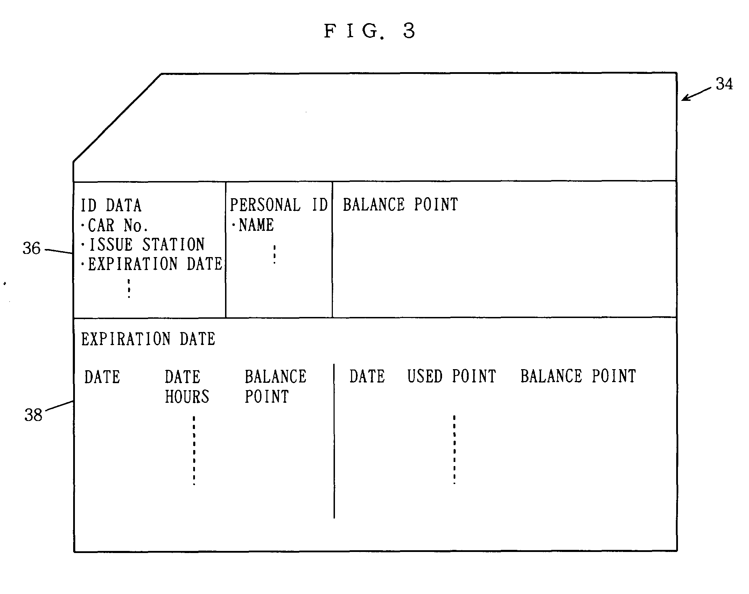

The parking card 34 is shown in Fig. 3. 36 schematically shows the memory area of the card 34, and 38 denotes the print area for balance, etc. The contents of the memory area 36 are arbitrary, and for example, card holder identification data such as the data in the license plate of the vehicle, expiration date, balance point are stored. In addition to them, for the convenience of customer management, the number of use, etc. may be stored. In the print area 38, the expiration date, dates of use, days of use, hours of use, and balance point are printed so that the user can understand the information at a glance.

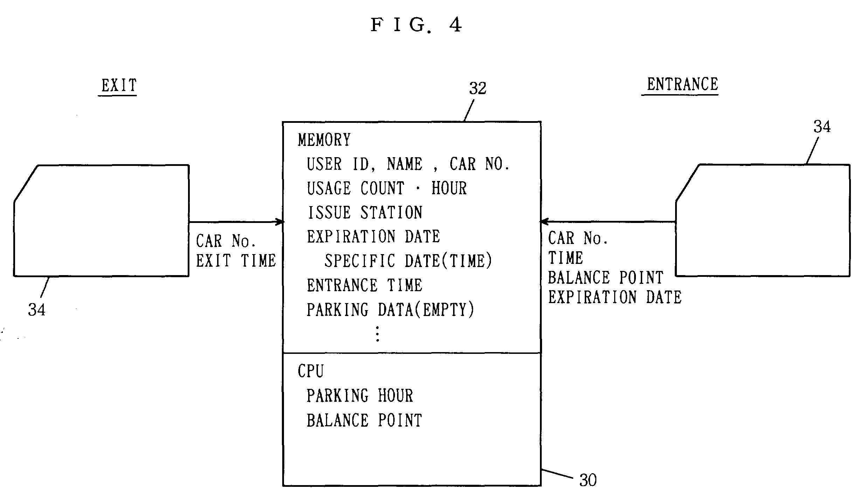

The information that the memory 32 receives from the parking card 34 in the charging system of the embodiment and the contents of processing by the CPU in relation to this system are shown in Fig. 4. The memory 32 uses the vehicle license number, entrance time and exit time of each vehicle to manages its parking hours. With the use of the vehicle license number, customer data such as number of use can be managed. The balance point is read from the card 34, and the CPU 30 calculates the balance point after parking and updates the balance point recorded in the card 34. The specified time zone stored in the memory 32 is a specific time zone of a day of the week that is expected to be particularly busy. This specified time zone is determined in advance by the parking space. The specified time zone varies depending on the siting conditions and size of the parking space. Generally speaking, the most busy time is from 10:00 a.m. to 8:00 p.m. of Saturdays, Sundays and holidays. These time periods are set as the specified time zone, and parking during this specified time zone is charged on an hourly basis, and parking in other time is charged on a daily basis. In other words, when the parking space is not busy, a lower parking charge is applied, and when the parking space is busy, a higher charge is applied. Setting of this specified time zone can be made freely. If the specified time zone is set according to the actual state of use of each parking space, the parking charge system can be modified easily.

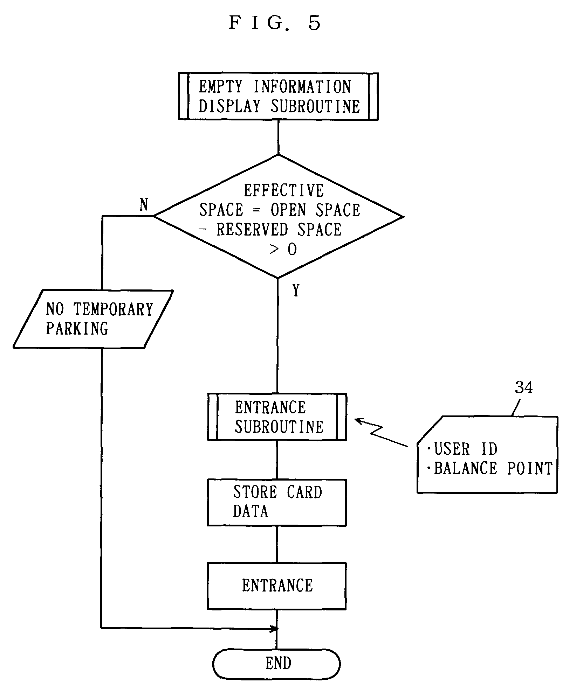

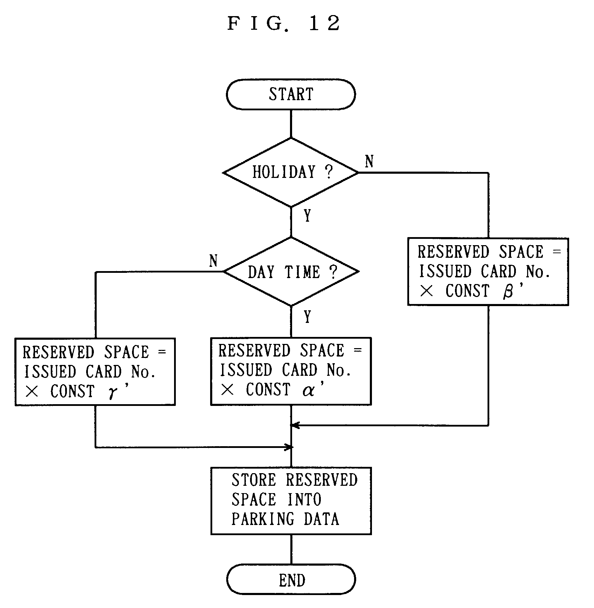

With Fig. 5 through Fig. 7, the process flows at the time of entrance and at the time of exit will be described. Fig. 5 shows the process flow at the time of entrance. For convenience, it is divided into a vacancy information display subroutine and an entrance subroutine, and the contents of the respective subroutines are illustrated. Here the vacancy information is displayed for vehicles seeking temporary parking. As will be explained with reference to Fig. 12, only when there is a vacant space in addition to the reserved space for the D-card holders, vehicles seeking temporary parking are allowed to enter. When there is no vacant space, no vehicles seeking temporary parking are allowed to enter. When vehicles seeking temporary parking can not be accepted, no admission for temporary parking is displayed on a display panel, etc. at the entrance of the parking space before a vehicle enters into the entrance berth.

At the time of entrance, a passenger makes the card reader 18 read the card 34, and the CPU 30 starts the entrance process. First, the card information is stored in the memory 32, and the CPU 30 gives vehicle transport instructions for entrance work to the entrance berth 12, lift 10, power carrier 22, etc. Although not illustrated, it is advisable to check the expiration date. Here, the balance check at every entrance is not made for the D-cards that are purchased on a continuous basis. However, this check of balance may be made. In this case, even if the balance is not sufficient, it is desirable to display that state and not to refuse entrance. An open space corresponding to the number of D-cards that are issued and are available must be reserved for the D-card holders so that any D-card holder never fails to enter the vehicle because of insufficient open space.

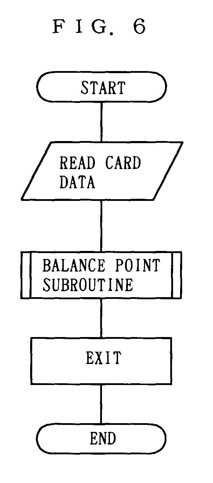

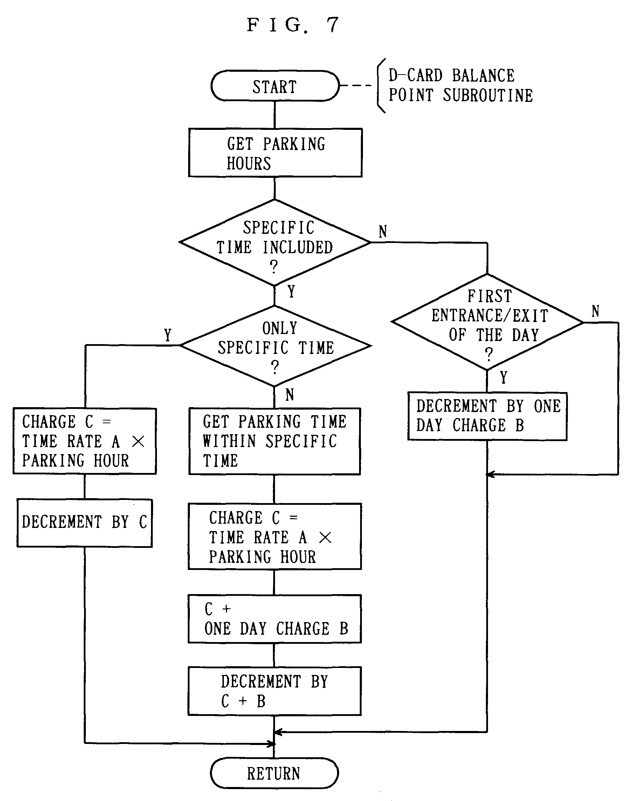

With reference to Fig. 6 and Fig. 7, the process at the time of exit will be described. At the time of exit, first the card information is read out, the balance is calculated, the balance is updated and the exit instructions are given. Here the charge and the balance may be calculated in the actual money unit, but they may be calculated in a point unit. If parking is made over a long period, for example, some days, the balance may be deficient. In such a case, it may be arranged that the holder of the card inserts a new card into the card reader 18' or make an adjustment in cash.

A D-card balance subroutine for updating the balance is shown in Fig. 7. First, it is judged whether the specified time zone is present between the exit time and the entrance time. If the specified time zone is not included, it is judged whether the exit is the first exit of the same day or not from the number of use, etc. stored in the memory 32. If it is the first exit, some points corresponding to the one day parking charge B are subtracted. If the exit is the second or subsequent exit of the day, no points are subtracted since the D-card entitles the holder to park any times in the same day for one day parking charge. Here the same day means within 24 hours starting from, for example, 0:00 a.m. This starting time of the 24 hours is arbitrary. For example, counting of 24 hours may be started from 7:00 p.m. by assuming an overnight parking.

If the specified time zone is included in the parking hours, it is checked whether the parking hours include only the specified time zone or they include any time outside the specified time zone. If parking hours extend within the specified time zone, the parking charge C is derived from a parking charge A per hour and the parking hours. This charge C is subtracted from the balance to update the balance. The parking charge per hour for the D-card may be set as a complimentary charge in comparison with vehicles of temporary parking. If the parking hours include any time outside the specified time zone, parking hours within the specified time zone are determined, and the hourly charge A is applied to derive the charge C, and the pay-by-the-day parking charge B is applied to the parking hours outside the specified time zone, irrespective of the duration of parking. If parking extends over several days, the charge B is multiplied by the number of these days.

Next, the charges A, B will be illustrated by example. A is a charge per hour and is applicable in a specified time zone, from 10:00 to 20:00 of Saturdays, Sundays and holidays. The charge A is, for example, $3/hour. B is a charge per day and is applicable in week days. The charge B is lower than the charge A and is set, for example, at $10/day. The setting of these charges is arbitrary. For example, the charge may be set more lower for only midnight, or the hourly charge A for the specified time zone may be set lower for D-card users relative to others. If a point system is used, for example, the D-card has 30 points before use, and the parking charge is 1 point per day (charge B) and the parking charge per hour in the specified time zone is 0.3 point (charge A).

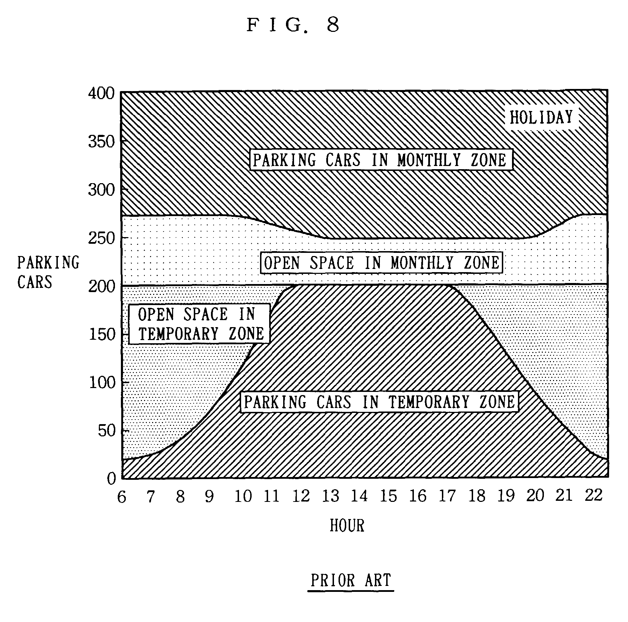

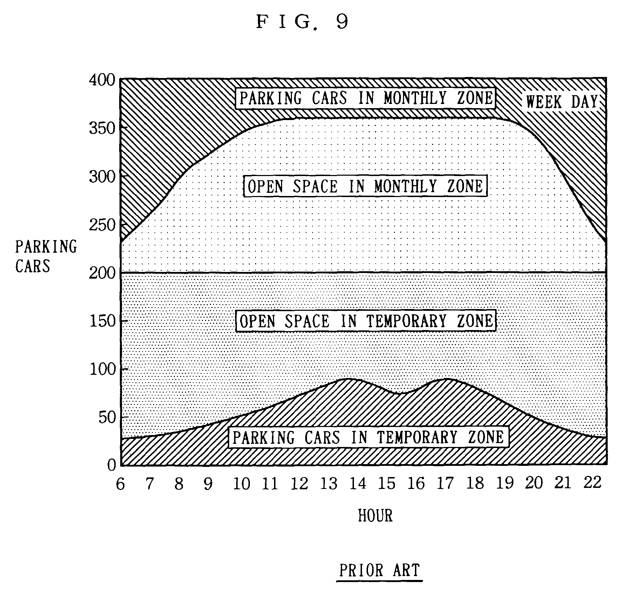

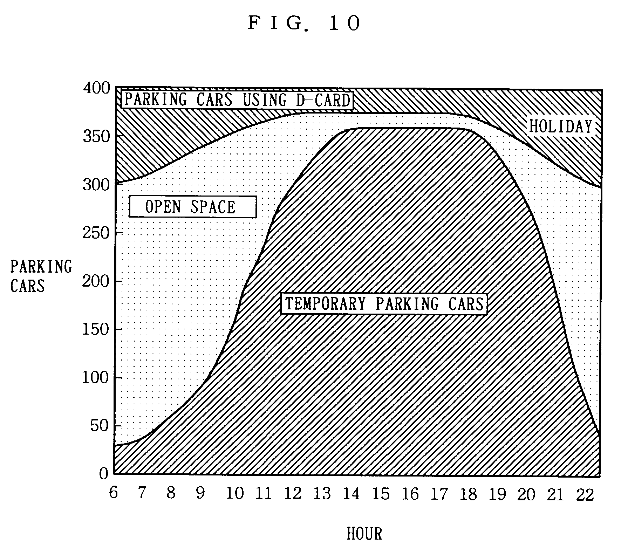

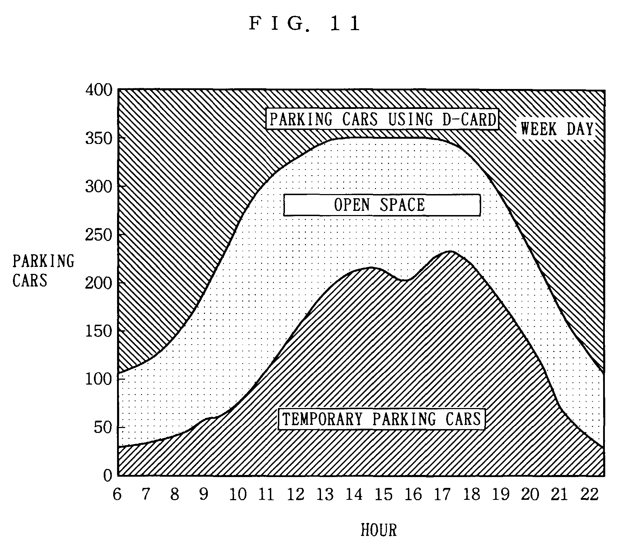

As will be described in the following, when a charging system using the D-card as its prepaid card is used, the availability factor of the parking space will be raised. With reference to Fig. 8 through Fig. 11, simulated uses of a parking space before and after the use of the card of the embodiment will be described. The parking space shown in these diagrams is located in a commercial zone and has a capacity of 400 vehicles. Fig. 8 plots the number of parking cars and the open space against time in holidays, and Fig. 9 shows those in weekdays. Fig. 10 and Fig. 11 show the number of parking cars and the open space (simulated values) in holidays and weekdays when the D-card of the embodiment is used in the same parking space. In conventional parking spaces, a pay-by-the-month (monthly) parking zone and a temporary parking zone are divided in advance to determine respective storage spaces of vehicles. In the parking space of Fig. 8 and Fig. 9, both zones had the same capacity of 200 vehicles. However, as shown in Fig. 8, the number of parking cars in the temporary zone reached the full capacity during the daytime of holidays. On the other hand, as shown in Fig. 9, the number of parking cars in the temporary zone was relatively small throughout the day in weekdays.

6

This indicates that in holidays the temporary parking space was extremely deficient during the daytime in holidays. In weekdays, vehicles for business use tend to repeat entrance and exit frequently and the parking time is short. As repetitive use of parking spaces is costly, these vehicles are expected to park on the street. As a result, much space for parking is wasted. Thus the parking ratio varies significantly, depending on day and time. Moreover, in addition to these factors, such as weekday, holiday and time zone in a day, the parking ratio is also influenced greatly by the capacity and the siting conditions of the parking Space. Here the daytime is defined for convenience to be from 10:00 to 20:00.

As shown above, the parking ratio is not stable even for the same parking space. When the temporary zone and the monthly zone are fixed in advance, at a busy time, even if there is some open spaces in the monthly zone, vehicles can not be allowed to park there. At this time, as temporary zones of nearby parking spaces are all full, it is extremely difficult to find open parking space. On the other hand, when the vacant or open space ratio is high, the parking space is hardly functioning as a parking space. Its space for parking is wasted. Its space for parking is not used effectively, and the availability factor of the parking space is lowered. Hence in the embodiment the temporary zone and the monthly zone are not fixed. A certain number of spaces is reserved for the D-card holders, and allotment of space for parking is made in an event-driven manner according to the conditions of the parking space at the time. Other spaces are available to vehicles irrespective of temporary parking or parking with the D-card.

With the use of the D-card, vehicles that have been using the conventional pay-by-the month parking arrangement can be parked continuously. As a result, vehicles can be parked continuously over months. As two kinds of charges are set for a specified time zone and the rest, if a vehicle is parked many times or for many hours in the same day, the charge is the same provided the parking hours are outside the specified time zone. Thus the parking space can be used at a lower charge. As parking with the D-card is made by users whose activities are closely related to a local area in many cases, the reduction in the parking charge makes it possible to use the parking space in place of a garage. Moreover, as the vehicle license number is stored in the D-card, and as will be described later, the number of cards issued is limited, garages are secured for the card holders. The parking ratio of the parking space varies with time, etc. If the space other than the above-mentioned certain reserved space is made open to vehicles seeking temporary parking, the space for parking of can be utilized more effectively, and the availability factor will be improved. This, in turn, allows the parking space side to lower the parking charge, and the earnings of the parking space as a whole will be increased. Moreover, the space for parking in an area where space for parking is not sufficient will be increased, and illegal parking will be decreased.

With the embodiment, as shown in Fig. 10, the number of parking cars increases even in the daytime of holidays, showing that the space for parking is utilized more effectively. As shown in Fig. 11, the parking ratio clearly increases in weekdays. Thus, with the use of the D-card of the embodiment, the availability factor of the parking space can be raised according to the varying number of vehicles seeking parking there.

Next, the number of reserved open spaces for ensuring parking for all the D-card holders will be described. The procedure for determining the number of reserved open spaces for D-card holders is shown in Fig. 12. The number of reserved open spaces is determined by predicting the amount of open spaces that would ensure parking for all vehicles of D-card holders seeking parking. The parking space first reserves this open space, and if there is a remaining space for parking, the parking space will admit vehicles for temporary parking. In the time zone other than the specified time zone, as shown in Fig. 10 and Fig. 11, there is always some open space, and it may not be necessary to reserve some space for D-card holders, but in Fig. 12, reservation of open space in weekdays and in time zones other than the daytime of holidays is indicated as well.

To calculate the number of reserved open spaces, first a constant multiplier for the number of D-cards that are issued and are available is determined. The statistics of the past performance of the parking space in the specified time zone are developed, and the constant multiplier is derived from the moving average of the past performance. For example, if new data $\alpha$ taken in the specified time zone is to be added to the mean of the past ten days $\alpha'$ in the specified time zone, the constant multiplier $\alpha'$ is determined by

$$\alpha' \leftarrow 0.9\,\alpha' + 0.1\,\alpha$$

and this is used as the prediction data. Then, the number of reserved spaces can be calculated by

$$\text{Number of reserved spaces} = \text{Number of D-cards available} \times \alpha'$$

Here the constant mulitiplier $\alpha'$ can be derived from the difference between the actual mean utilization ratio of the parking space and its latest actual parking ratio in the specified time zone. $\alpha'$ may be adjusted by using the actual ratios in the specified time zone of the latest several days. Or the number of D-cards available may be multiplied with a simple fixed constant. Naturally, as these conditions vary from parking space to parking space, $\alpha'$ may be set arbitrarily.

The constant multiplier $\alpha'$ depends on the siting conditions, size, etc. If it is 5 %, 15 vehicles is reserved in a parking space having a capacity of 400 vehicles and 300 D-cards available. The number of D-cards that are issued and are available is kept not more than the parking capacity. Here the number of parking cars at the peak of weekdays is set at 300 vehicles and this is used as the number of D-cards to be issued. Setting of these numbers can be made arbitrarily. The number of D-cards may be determined from the past records of issue of the cards. However, it is desirable to limit the issue of the cards within the parking capacity. This is to assure reliable parking for the D-card holders. Parking with the D-card is to replace the conventional pay-by-the month parking. The D-card holders seek continuous use in many cases. If the D-holders can use the parking space as their garages, the parking space can function as a parking space that is closely designed for its local community.

With reference to Fig. 12, the procedure for calculating the number of reserved spaces for D-card holders will be described. In the embodiment, the specified time zone was defined as the daytime of holidays. Hence the number of reserved spaces in this time zone is most important. The constant multipliers for the specified time zone, weekdays and the nighttime of holidays (time zone of holiday except the specified time zone) are set at $\alpha$', $\beta$' and $\gamma$', respectively. Normally, they are in a relation $\alpha' > \beta' > \gamma'$. The numbers of reserved spaces being derived from the number of D-cards being available and these constant mulitipliers are stored in the entrance/exit information of the memory 32. As described above, generally there are always open spaces in weekdays and in the nighttime of holidays. Hence calculation of the numbers of reserved spaces for these days and time zone may be omitted. Moreover, $\beta$' may be considered to be equal to $\gamma$'.

As described above, the use of D-card of the embodiment enables continuous parking and parking at a lower charge, and in turn, will improve the availability factor of the parking space. As a result, the utilization factor and the availability factor of the parking space will be improved, and spaces for parking will increase even in an area of insufficient parking spaces. Thus illegal parking will be reduced.

The charging system shown in the embodiment is for a multi-story parking space, but it may be a charging system of a multi-story parking space for bicycles.

## Claims

1. A charging system for a vehicle parking space using a prepaid card to charge the parking charge of the parking space comprising:

    a means for issuing at least two kinds of cards, a prepaid card including a right to park a vehicle for plural times and another parking card;
    a means for reading said prepaid card at a time of entrance of a vehicle into the parking space;
    a memory for storing data for specifying the vehicle entered and the entrance time from said means for reading said card;
    a processing means for determining, at a time of exit of said vehicle, the parking hours from the difference between the exit time and the entrance time stored and judging whether a specified time zone is included in said parking hours, and determining from the parking hours the amount of charge for the first parking of the day only for parking the vehicle outside the specified time zone and determining the amount of charge for parking within the specified time zone; and
    a means for charging, at the time of exit of said vehicle from the parking space, the amount of charge determined by said processing means on said prepaid card and printing the balance after charging on said prepaid card.

2. A charging system for a vehicle parking space of claim 1 wherein the number of said prepaid cards that are issued and are available is kept within the parking capacity of the parking space and each of said prepaid cards is printed with a vehicle identification number.

3. A charging system for a vehicle parking space of claim 1 or 2, further comprising:

    a means for counting the number of said prepaid cards issued and available;
    a means for predicting the required open space in said specified time zone from the counted number of prepaid cards issued and available; and
    a means for comparing the open space in the parking space at the time and said required open space and enabling parking with said another parking card when the open space at the time is wider than said required open space.

4. A charing system for vehicle parking space as claimed in claim 3, wherein the means for predicting the required open space in said specified time zone takes account of the counted number of prepaid cards issued and available together with data of the past usage of the parking space.

**5.** A charging system for a vehicle parking space using a prepaid card to charge the parking charge for the parking space comprising:

a means for issuing at least two kinds of cards, a prepaid card including a right to park a vehicle for plural times and another parking card;

a means for reading said prepaid card at a time of entrance of a vehicle into the parking space;

a memory for storing data for specifying the vehicle entered and the entrance time from said means for reading said card;

a means for counting the number of said prepaid cards issued and available;

a means for predicting the required open space in said specified time zone from the counted number of prepaid cards issued and available together with the past usage of the parking space; and

a means for comparing the open space in the parking space at the time and said required open space and enabling parking with said another parking card when the open space at the time is wider than said required open space.

**6.** A charging system as claimed in any preceding claim wherein the vehicle parking space is a multi-storey parking space.

**7.** A charging system for a vehicle parking space of any preceding claim, wherein in said parking space a vehicle is transported by a lift between the entrance position or the exit position and a parking floor, and on the parking floor a vehicle is transported by a carrier between said lift and a parking position provided along a travelling route of said carrier.

FIG. 1

EP 0 921 502 A2

# FIG. 2

EXIT                                                        ENTRANCE

```
                              ┌──────────┐ 32
                              │          │      ⎧ ·ENTRANCE/EXIT(OCCUPATION)
                              │  MEMORY  │ ─ ─ ─⎨ ·CONTROL DATA
                              │          │      ⎩ ·CUSTOMER DATA
                              └──────────┘            ⋮
                                   ↕
                              ┌──────────┐ 30
  18'                         │          │                    ENTRANCE          18
┌──────────┐                  │   CPU    │                  ┌──────────┐
│ EXIT CARD│  ←──────────→    │          │   ENTRANCE  ←──→ │  CARD    │
│  READER  │    EXIT          └──────────┘   REQUEST        │  READER  │
└──────────┘    REQUEST            │                        └──────────┘
     ┊                             │                              ┊
     ┊                        CARRYING                            ┊
  ┌─────┐                     INSTRUCTION                     ┌──────┐ 34
  │CARD │                                                     │ CARD │
  └─────┘                                                     └──────┘
    34
```

EXIT                          CARRIER                    ENTRANCE

| EXIT |  |        | CARRIER |        | ENTRANCE |  |
| LIFT | BERTH |   |         |        | LIFT | BERTH |

10'      16              22              10      12

# F I G. 3

| ID DATA · CAR No. · ISSUE STATION · EXPIRATION DATE ⋮ | PERSONAL ID · NAME ⋮ | BALANCE POINT |
|---|---|---|

**EXPIRATION DATE**

| DATE | DATE HOURS | BALANCE POINT | DATE | USED POINT | BALANCE POINT |
|---|---|---|---|---|---|
| | ⋮ | | | ⋮ | |

EP 0 921 502 A2

# FIG. 4

EXIT       32                 ENTRANCE

34

```
MEMORY
  USER ID, NAME , CAR NO.
  USAGE COUNT · HOUR
  ISSUE STATION
  EXPIRATION DATE
    SPECIFIC DATE(TIME)
  ENTRANCE TIME
  PARKING DATA(EMPTY)
      ⋮
CPU
  PARKING HOUR
  BALANCE POINT
```

CAR No.
EXIT TIME

CAR No.
TIME
BALANCE POINT
EXPIRATION DATE

34

30

EP 0 921 502 A2

F I G. 5

```
        ┌─────────────────────────┐
        │ EMPTY INFORMATION       │
        │ DISPLAY SUBROUTINE      │
        └─────────────────────────┘
                    │
                    ◇
              EFFECTIVE
    N    SPACE = OPEN SPACE
   ←─────  - RESERVED SPACE
                > 0
                    │ Y
```

NO TEMPORARY
PARKING

ENTRANCE
SUBROUTINE                    ← 34

· USER ID
· BALANCE POINT

STORE CARD
DATA

ENTRANCE

END

F I G. 6

```
          ┌─────────────────┐
          (     START       )
          └─────────┬───────┘
                    │
          ╱─────────────────╱
         ╱  READ CARD      ╱
        ╱   DATA          ╱
       ╱─────────┬───────╱
                 │
       ╔═╦───────────────╦═╗
       ║ ║ BALANCE POINT ║ ║
       ║ ║ SUBROUTINE    ║ ║
       ╚═╩───────┬───────╩═╝
                 │
        ┌────────────────┐
        │     EXIT       │
        └────────┬───────┘
                 │
        ┌────────────────┐
        (      END       )
        └────────────────┘
```

## F I G. 7

START --- { D-CARD BALANCE POINT SUBROUTINE

GET PARKING HOURS

SPECIFIC TIME INCLUDED ? —N→

ONLY SPECIFIC TIME ? —Y→

Y↓

FIRST ENTRANCE/EXIT OF THE DAY ? —N→

Y↓

CHARGE C = TIME RATE A × PARKING HOUR

GET PARKING TIME WITHIN SPECIFIC TIME

DECREMENT BY ONE DAY CHARGE B

DECREMENT BY C

CHARGE C = TIME RATE A × PARKING HOUR

C + ONE DAY CHARGE B

DECREMENT BY C + B

RETURN

F I G. 8

PARKING CARS IN MONTHLY ZONE

HOLIDAY

OPEN SPACE IN MONTHLY ZONE

OPEN SPACE IN TEMPORARY ZONE

PARKING CARS IN TEMPORARY ZONE

PARKING CARS

HOUR

PRIOR ART

FIG. 9

PRIOR ART

F I G. 1 0

F I G. 1 1

PARKING CARS USING D-CARD

WEEK DAY

OPEN SPACE

PARKING
CARS

TEMPORARY PARKING CARS

HOUR

F I G. 1 2

```
                    ┌──────────────┐
                    │    START     │
                    └──────┬───────┘
                           │
                      ╱────┴────╲           N
                     ╱  HOLIDAY ? ╲──────────────────┐
                      ╲           ╱                   │
                       ╲────┬────╱                    │
                           │ Y                        │
                                              ┌───────────────────┐
              N       ╱────┴────╲             │ RESERVED SPACE =  │
     ┌───────────────╱ DAY TIME ?╲            │ ISSUED CARD No.   │
     │                ╲          ╱            │ × CONST  β'       │
     │                 ╲───┬────╱             └─────────┬─────────┘
     │                     │ Y                          │
┌─────────────────┐  ┌─────────────────┐                │
│ RESERVED SPACE =│  │ RESERVED SPACE =│                │
│ ISSUED CARD No. │  │ ISSUED CARD No. │                │
│ × CONST  γ'     │  │ × CONST  α'     │                │
└────────┬────────┘  └────────┬────────┘                │
         │                    │◄───────────────────────┘
         └────────────────────┤
                              │
                    ┌─────────────────┐
                    │ STORE RESERVED  │
                    │ SPACE INTO      │
                    │ PARKING DATA    │
                    └────────┬────────┘
                             │
                    ┌──────────────┐
                    │     END      │
                    └──────────────┘
```